Europäisches Patentamt

European Patent Office

Office européen des brevets

(11) Publication number: 0 312 204 A2

## EUROPEAN PATENT APPLICATION

(21) Application number: 88308179.6

(22) Date of filing: 02.09.88

(51) Int. Cl.⁴: H05B 3/14 , F16L 53/00

(30) Priority: 09.10.87 GB 8723751
14.12.87 GB 8729121
03.03.88 GB 8805073

(43) Date of publication of application:
19.04.89 Bulletin 89/16

(84) Designated Contracting States:
AT BE CH DE ES FR GB IT LI NL SE

(71) Applicant: RAYCHEM LIMITED
Rolls House 7, Rolls Buildings Fetter Lane
London, EC4 1NL(GB)

(72) Inventor: Peacock, Donald George
Paradise Kempsford
Gloucestershire, GL7 4EU(GB)
Inventor: Baigrie, Stephen Michael
104 Ridge Nether Moor Liden
Swindon Wiltshire SN3 6NE(GB)
Inventor: Park, George Barry
38 Restrop View Purton
North Swindon Wiltshire(GB)

(74) Representative: Auckland, Jacqueline et al
Raychem Limited Intellectual Property Law
Department Faraday Road Dorcan
Swindon, Wiltshire SN3 5HH(GB)

(54) Conductive polymeric conduit heater.

(57) A heater conduit comprises a hollow tube comprising a conductive polymeric material that exhibits PTC behaviour, and two electrodes positioned in electrical contact with the tube, preferably in a helical configuration, There is preferably an electricably insulating core inside and an outer jacket around the conductive polymeric tube. The conduit can be heated by the passage of electrical current therethrough, and is preferably used to heat a fluid passing through the tube.

Fig.1.

EP 0 312 204 A2

## CONDUCTIVE POLYMERIC CONDUIT HEATER

This invention relates to a conduit comprising conductive polymeric material, which can be used to heat a fluid passing through the conduit.

Conductive polymeric materials and devices incorporating them are also well known. Reference may be made for example to U.S. Patents Nos. 2,952,761, 2,978,665, 3,243,753, 3,351,882, 3,571,777, 3,658,976, 3,757,086, 3,793,716, 3,823,217, 3,858,144, 3,861,029, 3,950,604, 4,017,715, 4,072,848, 4,085,286, 4,117,312, 4,151,126, 4,177,376, 4,177,446, 4,188,276, 4,237,441, 4,242,573, 4,246,468, 4,250,400, 4,252,692, 4,255,698, 4,271,350, 4,272,471, 4,304,987, 4,309,596, 4,309,597, 4,314,230, 4,314,231, 4,315,237, 4,317,027, 4,318,881, 4,327,351, 4,330,704, 4,334,351, 4,352,083, 4,361,799, 4,388,607, 4,398,084, 4,413,301, 4,425,397, 4,426,339, 4,426,633, 4,427,877, 4,435,639, 4,429,216, 4,442,139, 4,459,473, 4,470,898, 4,481,498, 4,476,450, 4,502,929; 4,514,620, 4,517,449, 4,534,889, and 4,560,498; J. Applied Polymer Science 19, 813-815 (1975), Klason and Kubat; Polymer Engineering and Science 18, 649-653 (1978), Narkis et al; European Application Nos. 38,713, 38,714, 38,718, 74,281, 92,406, 119,807, 133,748, 134,145, 144,187, 157,640, 158,410, 175,550 and 176,284; and Japanese Published Patent Application No. 59-122,524.

The use of articles comprising conductive polymeric materials as heaters is known. One of the most common types of conductive polymeric heaters is a strip heater. This is typically in the form of an elongate strip of conductive polymeric material with two elongate electrodes of opposite polarity embedded in the strip on either side thereof, extending along the length of the heater. When the electrodes are connected to a power source, current flows across the width of the strip to heat the strip. Such a heater is typically employed by wrapping it around, or taping it to, the substrate to be protected, for example around or to a pipeline. It may be used for example as a frost protection device, or to maintain a fluid carried by the pipeline at a certain temperature.

Typically strip heaters exhibit PTC behaviour (positive temperature coefficient of resistivity), that is a sharp rise in resistivity at a particular temperature, or over a short range of temperatures. This temperature or temperature range is known as the anomaly or switching temperature. Typically the material, which is cross-linked, is selected to exhibit the sharp rise in resistivity at, or slightly above, the melting temperature of the composition. The PTC behaviour is advantageous since it means that if one region of the article preferentially draws more current and consequently becomes hotter than adjacent regions, the resistivity of that region rises significantly, mitigating the effect of the preferred current draw to that region. Hence heating is stabilised and overheating of any particular region avoided. Materials which exhibit a PTC effect are typically referred to simply as PTC materials.

The terms "composition exhibiting PTC behaviour" and "PTC composition" are used in this specification to denote a composition which has an $R_{14}$ value of at least 2.5 or an $R_{100}$ value of at least 10, and preferably both, and particularly one which has an $R_{30}$ value of at least 6, where $R_{14}$ is the ratio of the resistivities at the end and the beginning of a $14^\circ$ C range, $R_{100}$ is the ratio of the resistivities at the end and the beginning of a $100^\circ$ C range, and $R_{30}$ is the ratio of the resistivities at the end and the beginning of a $30^\circ$ C range.

Another use of known conductive polymeric heaters is as a heating element for an electric blanket. One such heater, which in fact uses a PTC material, is described in US 4271350 (Sunbeam). In one embodiment (Figure 2 of the reference) the heater comprises a flexible insulating centre core formed of stranded glass or rayon. Wrapped on the core are helically wound spaced conductors separated by insulating spacers, and surrounding these an extruded sleeve of uncross-linked PTC material and surrounding jacket of a thermoplastic coating. The PTC material must be annealed to give it its required temperature resistance characteristics. The thermoplastic coating material has a higher melting point than the uncross-linked PTC material, and hence can maintain the integrity of the PTC material during the annealing process. Also the spacers between the electrodes prevent physical contact of the electrodes during softening of the PTC material during the annealing process.

Another use of a conductive polymeric heater is described in GB 2065430A (Junkosha). This heater uses a conductive material comprising sintered carbon-filled PTFE made by blending 10 wt % of electroconductive carbon with PTFE fine powder and a liquid lubricant, ram extruding the material and subsequently removing the lubricant. The conductive material may be made in tape form wrapped around an inner tube. Alternatively the conductive material may be made in tube form itself. Electrodes are positioned on the conductive material and powered to pass electrical current through the conductive material, thereby heating it.

We have discovered a new method and article employing conductive polymeric material which exhibits PTC behaviour for use as a heater. The article and method involve using a conductive polymeric material in the form of a conduit, which can be used directly to heat fluid flowing therethrough.

A first aspect of the invention provides a heatable conduit suitable for heating a fluid passing through the conduit, comprising

(a) an electrically conductive polymeric material which exhibits PTC behaviour and comprises an organic polymer, and dispersed in the polymer a particulate conductive filler, and

(b) at least one pair of electrodes of opposite polarity which are helically arranged and in contact with the conductive material, which when connected to a source of electrical power cause a substantial portion of the electrical current to flow between the electrodes substantially parallel to the faces of the conduit, thereby heating the electrically conductive polymeric material and hence the fluid.

A second aspect of the invention provides a heatable conduit suitable for heating a fluid passing through the conduit, comprising

(a) an electrically conductive polymeric material, which exhibits PTC behaviour and comprises an organic polymer, and dispersed in the polymer a particulate conductive filler,

(b) an electrically insulating hollow tubular liner, and

(c) at least one pair of electrodes of opposite polarity which are in electrical contact with the conductive polymeric material and which when connected to a source of electrical power cause a substantial portion of the electrical current to flow between the electrodes substantially parallel to the faces of the conduit, thereby heating the electrically conductive polymeric material and hence the fluid.

A third aspect of the invention provides a method of heating a fluid comprising:

(a) providing a conduit according to the first or second aspect of the invention, and

(b) connecting the electrodes to a source of electrical power to cause a substantial portion of the electrical current to flow between the electrodes substantially parallel to the faces of the conduit, thereby heating the conduit and hence the fluid.

Preferably the article comprises all the features of both the first and second aspects of the invention. Therefore preferably both (i) the electrodes are helically arranged and (ii) an electrically insulating liner is included.

The fluid passing through the tube may be a liquid or a gas.

The conductive polymeric material exhibits PTC behaviour. This has two advantages. First the article is self regulating. This means that for a constant voltage supply, the power output adjusts automatically, compensating automatically for fluctuations in ambient conditions, to maintain a constant temperature in the conductive polymeric material. Secondly, the article is self limiting. This means there is a maximum temperature which the article never exceeds since at the anomaly temperature or temperature range the conductive polymeric material becomes non-conductive, and effectively "switches itself off", so that no further heating above the anomaly temperature takes place.

The article according to the invention may be operated at temperatures where it is self regulating, or at temperatures where it is self limiting or both.

In a preferred method according to the invention the electrodes are connected to a source of electrical power which is operated so that a sufficient power is applied so that the article operates in a self regulating manner. For some applications, the conduit is maintained at a temperature which is preferably in excess of 50°C, more preferably in excess of 80°C, and for some applications in excess of 100°C. For other applications the conduit is preferably maintained at lower temperatures, e.g. at less than 25°C, for example at about 10°C for frost protection or at about -10°C for prevention of waxing in diesel fuel.

In preferred embodiments according to the invention the conduit is both the heater for the fluid and also the container for the fluid. In other embodiments the fluid is contained in another tubular vessel, and the conduit according to the invention is placed to surround that vessel in thermal contact therewith.

The heating of fluids in pipes by wrapping conductive polymeric strip heaters around the pipes is known in the prior art. However, an advantage of the conduit of the present invention compared to strip heaters is that the conduit can be in contact with the entire outer surface of the vessel containing the fluid; or where the conduit is the container as well as the heater for the fluid, it is in direct contact with the volume of fluid. Strip heaters in contrast are typically wrapped around pipes to be heated with spaces between adjacent turns, i.e. they are not in contact with the entire outer surface of pipes.

Another advantage of the conduit according to the invention is that, being tubular, it can be used around, or to form small diameter conduits for the passage of fluids. Typically it is difficult to wrap traditional heater strips around small diameter pipes where the angle of bend is extreme.

When the conduit is not the container for the fluid (i.e. when the fluid is in another vessel in thermal contact with the conduit) the conduit may be a push fit over the container, or it may be a loose fit over the container and a thermally conductive medium introduced between the conduit and the container. The thermally conductive medium may comprise, for example a grease, or a thermally conductive adhesive. Preferably the thermally conductive medium has a sufficiently low viscosity that it can flow to fill the space between the conduit and the container.

The conductive polymer material is preferably in the form of a tube. In this case the conductive polymeric material preferably forms a continuum between the electrodes, i.e. there are no air gaps or electrically insulating gaps between the electrodes. This is to be contrasted with the embodiment in GB 2065430A (Junkosha) in which a conductive tape with electrodes on the long edges thereof is wrapped around a core tube. In that case there is an air gap between the edges of adjacent turns of the tape, and hence between adjacent electrodes on those turns.

In another embodiment the conductive polymeric material is in the form of discrete members extending between the electrodes. For example, the discrete members may be fibres or tapes. These are preferably helically arranged and used with helical bus bars or electrodes. The helical busbars are preferably helically wound in the opposite sense to the helix of conductive polymeric fibres or tapes.

The conduit according to the invention may be lined with a layer of electrically insulating material. This is particularly advantageous in conditions where the medium in contact with the inner surface of the conduit is electrically conductive, since in these conditions the electrically insulating lining prevents short circuiting of the electrical current through the electrically conductive medium in contact with the inner surface of the conduit. For example, where the conduit is also the fluid container, and the fluid is electrically conductive, the electrically insulating layer prevents short circuiting through the fluid. Similarly, where the conduit surrounds a vessel for the fluid, and the vessel is electrically conductive, the electrically insulating layer prevents short circuiting through the vessel. The conduit may also have an outer coating of an electrically insulating layer. This may be advantageous where the conduit is in environments which might cause short circuiting, e.g. in damp or wet environments or in areas prone to splashing by conductive fluids.

Where an electrically insulating inner or jacket, or both, are used, these members may also be selected for their thermal properties. In one embodiment the electrically insulating inner is preferably relatively thermally conductive. For example it may include additives to lower its thermal conductivity compared to the material thereof without the additives. A suitable liner is an electrically insulating polymer with particulate fillers of high thermal conductivity, such as zinc oxide. Liners without additives, i.e. unfilled polymers, may be acceptable in many applications, particularly if they are thin and thus do not constitute a very large thermal barrier. Preferably the lining has an electrical resistivity of at least $10^{10}$ ohm.cm.

In another embodiment, the electrically insulating jacket is also thermally insulating, to minimise heat losses externally from the conduit. For example, it may comprise a foam or other material having a very low thermal conductivity.

Where a liner or outer jacket or both are used, the composite structure may be constructed in the factory. This has a number of advantages compared to installation of one of the layers, e.g. the outer layer, in the field. First there is no risk of there being any gaps between the conduit and its jacket which may result in non uniform or incorrect thermal properties. Secondly the type and nature of the lining and jacket can be determined in the factory having regard to the required electrical and thermal properties and the installation design. This avoids the common problem of the wrong type or thickness of jacket being installed in the field. Thirdly a factory-installed outer jacket provides mechanical and chemical protection for the conduit while it is in transit. The composite design can advantageously be cut to length in the field.

Where an outer jacket is used this may be applied in the factory at the same time as the conductive polymeric material of the conduit, e.g. by co-extrusion, or subsequently, e.g. by tandem extrusion.

Where the conduit is in direct contact with the fluid the inner electrically insulating layer is preferably selected to be chemically resistant to the fluid. For example, where the fluid is water, the inner electrically insulating layer is preferably polyethylene and where the fluid is diesel fuel, it may be for example nylon, polychloroprene or polyvinylidene fluoride.

Where the fluid carried by the conduit is electricaly insulating, there is no requirement for an electrically insulating layer to be used. In this case a liner may be omitted, but the conductive polymeric material of the conduit itself is preferably chemically resistant to the fluid.

The outer electrically insulating layer, where used, may be any suitable material depending on the environment to which the heater is exposed. If it is to be used in damp environments where there is the possibility of water short circuiting the electrodes a preferred outer electrically insulating layer is polyethylene. If the heater is prone to splashing by e.g. diesel fuel, a preferred outer electrically insulating layer is

EP 0 312 204 A2

nylon, polychloroprene or polyvinylidene fluoride.

Where either inner or outer electrically insulating layers, or both, are used the electrodes may be positioned between the inner layer and the electrically conductive polymeric material, or between the outer layer and the electrically conductive polymeric material. Alternatively the electrodes may be embedded in the electrically conductive polymeric material.

Where a multi layer structure is used, each layer may be added sequentially for example by sequential extrusion, or the layers may be integrally formed, e.g. by coextrusion.

The electrodes may be any suitable shape. Examples are wire, foil strips, metallic braid, conductive mesh, corrugated metal strip, silver paint or spray coated metal. The electrodes may be ultrasonically bonded into thermal contact with the conductive polymeric material.

The electrodes extend generally longitudinally. They may extend substantially parallel to the major axis of conduit or be helically wrapped.

The use of helically wrapped electrodes has a number of advantages. An important advantage is improved flexibility, as compared, for example, with straight electrodes extending parallel to the axis of the conduit. Another advantage of helically winding the electrodes is that it enables two (or a small number) of electrodes to be used around even large diameter pipes while maintaining a small electrode separation. This is important to avoid hot-lining which is a known problem encountered with the use of conductive polymeric materials which exhibit PTC behaviour. With these materials, when the electrical current flows parallel to the surface, there is a tendency for a zone of high resistance and consequent high voltage gradient to develop between, and generally parallel to, the electrodes during electrical powering. This phenomenom is known as "hot-lining" and may eventually lead to damage to the heater. Hot-lining is minimised by minimising the electrode separation. The heli cal configuration enables not only small, but also large, diameter substrates to be electroded using two electrodes while maintaining the same optimum small electrode separation. Other features which affect hot-lining are the applied voltage and the material properties. Taking these into consideration, the pitch of the helical winding of the electrodes (which defines the electrode separation) can be selected to avoid hot-lining while providing the required heat output. Thus the simple procedure of varying the pitch of the electrode windings increases the ability to select different materials and diameters for the conduit. Changing the pitch of the helix can be used to alter the range of power per unit length for conduit of given size, and also to vary the power output along its length. Other factors which are also relevant to affecting the power output, which can be changed, include the wall thickness of the conductive polymeric layer, and the resistivity of the conductive material.

A.C. or D.C. power sources may be used to supply power to the articles.

There may be a single pair of electrodes of opposite polarity, or multiples of pairs. For example multiples of pairs of helically wrapped electrodes may be used.

Also three electrodes, (or groups of three) may be used with a three phase power system. For example three electrodes may be wrapped helically.

It may be useful to include a layer of material adjacent to the electrodes having a resistivity lower than that of the bulk of the material, for example to minimise heating around the electrodes. This additional layer may exhibit ZTC (zero temperature coefficient) NTC (negative temperature coefficient) or PTC behaviours. The layer may be, for example, a conductive adhesive.

An additional conductive polymeric layer (more, less or as conductive as the bulk of the material adjacent the electrodes) may also be used to minimise the contact resistance between the electrodes and the conductive polymeric material in the bulk of the article.

It is known from GB 1600256 and GB 1600257 that for strip heaters comprising a conductive polymeric composition in contact with electrodes, the longer they are in service the higher the resistance and the lower the power output of the heaters. It is also known from those references that the lower the initial contact resistance between the electrodes and the conductive polymer composition the smaller the increase in total resistance with time. According to the references, the contact resistance can be decreased by a process which comprises:

(1) heating a conductive polymer composition to a temperature ($T_p$) above its melting point ($T_m$);

(2) heating an electrode, out of contact with the conductive polymer composition, to a temperature ($T_e$) above the melting point of the conductive polymer composition;

(3) contacting the electrode and conductive polymer composition in contact therewith.

In one case according to the present invention the electrodes are helically positioned. In another case according to the invention an inner lining layer is used, and this may have a melting point lower than the processing temperature of the conductive polymeric composition and/or lower than the preferred preheat temperature ($T_e$) of the electrodes. Thus in these cases it is not possible, or at least extremely difficult to

5

provide a hollow conduit using the heating process of GB 1600256 to minimise the contact resistance between the electrodes and the conductive polymer composition. Thus according to the present invention an additional conductive polymeric layer is preferably provided around the electrodes before positioning in contact with the inner lining layer (where present) and the bulk conductive polymeric material. The additional conductive polymeric layer is applied to electrodes using wire heating according to GB 1600256 to minimise contact resistance therebetween. The additional conductive polymer layer and the bulk conductive polymeric material are compatible. Thus the contact resistance between the electrodes and the bulk conductive polymeric material is minimised.

A preferred process for minimising contact resistance according to the present invention comprises the following stages. The electrode and the additional conductive polymeric layer are heated to a temperature above the melting temperature of the material of the additional conductive polymeric layer and then brought into contact with each other. This produces a low contact resistance between the electrode and the additional conductive polymeric layer (as described in GB 1600256). At some subsequent stage (which may be immediate or some time later) the electrodes are wrapped around an inner electrically insulating liner or core (e.g. nylon). This wrapped core tube is then fed into a cross-head extruder die. A preheat oven may be used just before the cross-head to heat the coated wires on the core tube to a temperature high enough to soften the wire coating, but not high enough to melt the core tube. The bulk conductive polymeric material is extruded over the liner at a temperature below the melting temperature of the inner electrically insulating liner. This temperature is sufficient to bond the polymeric material of the conductive layer around the electrodes to the bulk conductive polymeric material, but is not sufficiently high to melt the inner electrically insulating liner.

Where mechanical flexibility is important the material and thickness of the conduit, i.e. the conductive polymeric and electrically insulating layer(s) are preferably selected to allow flexibility. For some applications the conduit is sufficiently flexible that it can be bent around a 4 inch diameter mandrel by hand, or more preferably around a 1 inch diameter mandrel by hand. For other applications less flexibility is required. The preferred helical arrangement of electrodes, where used, also enhances flexibility.

The conduit of the present invention may be used for example, to heat water flowing through a tube. The conduit may be the container for the water or heat a tube already containing the water. Applications are, for example, the prevention of freezing of water in conduits leading to windscreen washers for automobiles, and the heating of water for domestic use. Similar examples are for example heating diesel fuel. For these applications, long lengths (e.g. several metres) of heated conduit may be used. Alternatively a short length of heated conduit may be used at one end of a conduit containing fluid to effect the heating, e.g. at the end of a shower hosing. The conduit is particularly advantageous for heating fluids where small bore conduits are required, especially those having an internal diameter less than 25mm, more preferably less than 10mm, especially less than 5mm. Such objects are difficult to heat or are heated inefficiently using strip heaters, since such heaters either have to be wrapped around the small diameter, or applied longitudinally along one side resulting in non-uniform heating.

Some embodiments according to the invention involve delivering heated fluid from the conduit. Examples of this which may be mentioned included heated conduits for windscreen washer water on automobiles, and heated showers. In these cases a jet is usually included to direct the water. The jet may be incorporated in a conduit according to the invention. The jet may also be heated, separately or in conjunction with the conduit. The jet may be made integrally with the conduit.

The heated conduit according to the invention may be electrically or mechanically connected, or both, to members other than a jet assembly. For example it may be connected to lengths of pipe extending from or through the conduit (including junctions, connections, T's and Y's) or to taps or to valves. Thus the present invention also includes a heatable conduit according to the invention in combination with electrical and/or mechanical connection means which connect the conduit to other objects, for example to the power supply, or to parts extending through or from the heatable conduit.

Any suitable material can be used for the conductive polymeric material of the article, including any of the materials disclosed in the references to conductive polymeric materials and devices incorporating them mentioned above. The polymer preferably comprises at least one thermoplastic crystalline polymer. Particularly useful polymers are ole fin polymers, including homopolymers, particularly polyethylene and the polyalkenamers obtained by polymerizing cycloolefins., copolymers of two or more olefins; and copolymers of one or more olefins, e.g. ethylene or propylene, with one or more olefinically unsaturated comonomers, preferably polar comonomers, e.g. vinyl acetate, acrylic acid, methyl acrylate and ethyl acrylate. Also particularly useful are fluoropolymers (which may be olefin polymers), in particular polyvinylidene fluoride and copolymers of ethylene with tetrafluoroethylene and/or a perfluorocomonomer. Mixtures of polymers can be used, including mixtures of crystalline and amorphous, e.g. elastomeric, polymers. One example that can be used is a semiconductive copolymer compound DHDM 7704 black supplied by BP Chemicals Ltd (which comprises a dispersion of carbon black in an ethylene ethylacrylate copolymer).

Within the conductive polymeric material the conductive particles are preferably substantially uniformly distributed in the polymer. Preferably the conductive PTC polymeric material is made by melt processing. This method advantageously results in uniform dispersion.

The conductive material can be shaped into a conduit by any suitable method, especially by a melt processing technique, e.g. by melt extrusion.

Preferably the amount of conductive filler used is at least 10 weight %. Preferably the conductive filler is carbon black.

The conductive polymeric material used in the conduit is preferably cross-linked. It may be cross-linked by irradiating it with high energy electrons to a beam dose in the range 2-35 MRads especially 2-25 MRads for example 10 or 15 MRads. The cross-linking may also be effected chemically.

The degree of cross-linking of the conductive polymer may be expressed in terms of gel content (ANS1 ASTM D2765-68) of the polymeric matrix of the condutive polymer (i.e. excluding the conductive filler or any other non-polymeric additives present). Preferably the gel content of the polymeric matrix is at least 10%, more preferably at least 20%, e.g. at least 30%, more preferably at least 40%.

The cross-linked conductive material used in the invention will have a melting point at least as high, or higher than its typically immediately surrounding jacket layer or any surrounding jacket layer.

Embodiments of the invention will now be described, by way of example, with reference to the accompanying drawings wherein:

Figure 1 is a first embodiment of conduit according to the invention;

Figures 2, 3 and 4 show alternative embodiments of conduit according to the invention heating a fluid passing therethrough;

Figure 5 shows the conduit of Figure 4 heating a vessel containing fluid;

Figure 6 shows the conduit of Figure 1 in conjunction with a jet for delivering fluid passing through the conduit.

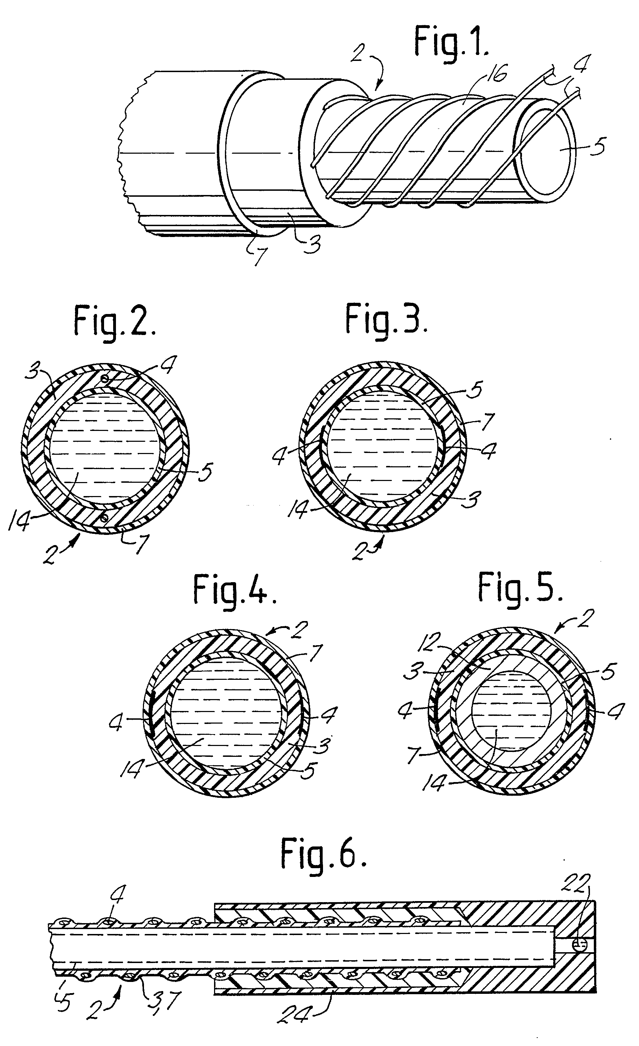

Referring now to the drawings, Figure 1 shows a heatable conduit 2. Two wire electrodes 4 of opposite polarity are helically wound around an electrically insulating lining nylon core 5. A conductive polymer tube 3 surrounds the wrapped electrodes 4 and can be extruded over the electrode covered nylon core 5. Finally an electrically insulating polyethylene sheath 7 surrounds the conductive polymer tube 3. The helical wrapping enables close spacing of the electrodes to be easily achieved. It also facilitates flexibility of the conduit. The electrodes can be connected to a power source. Passage of electrical current can be used to heat the conductive polymer layer 3, the nylon core 5 and hence heat a fluid (not shown) passing through the core 5 or any substrate positioned in thermal contact with core 5.

Figure 2 shows a similar embodiment in which the electrodes 4 are embedded directly in the walls of the conductive polymer layer 3, rather than between the conductive polymer layer 3 and the core 5. Water 14 is shown flowing through the core 5.

Figure 3 shows another conduit 2 similar to that of Figure 1 heating water 14 flowing therethrough. In this case the electrodes are in the form of flat metal braids 4. The braids 4, like the wires of Figure 1 are sandwiched between the conductive polymer layer 3 and the inner electrically insulating layer 5.

Figure 4 is identical to Figure 3 except that the electrodes 4 are sandwiched between the conductive polymeric layer 3 and the outer electrically insulating layer 7.

Figure 5 shows the conduit of Figure 4 positioned around a vessel 12, containing water 14. In this case the water 14 is heated via the vessel 12 rather than being in direct con tact with the conduit 2. The conduit 2 may be a push fit on vessel 12.

Figure 6 shows the conduit of Figure 1 in conjunction with a jet for delivering water. A metal jet 22 mounted in a plastic casing 24 is positioned at the end of the core 5 of the conduit 2 so that water passing through the core 5 is delivered to the jet 22. The plastic casing 24 surrounds an end length of the conduit 2 to hold the jet and conduit in co-operation. The jet 22 itself may also comprise a heater.

Electrical connection to the conduits of Figures 2 - 7 may be at the end of the conduit where the electrodes project therefrom. Alternatively, connection may be made by use of a crimp which penetrates the outer layers to contact the electrodes 4.

Conduits according to the invention were made, as described in the following examples.

Example 1

An electrically powerable conduit having the structure of Figure 4 was made by the following method.

A conductive polymer composition containing carbon black and polyethylene, and exhibiting PTC behaviour, was extruded onto a tube of nylon.

Strips of tin plated copper .005 inches thick and .120 inches wide were attached to opposite sides of a 7 inch length of the tubing by means of conductive silver loaded epoxy adhesive. An insulating outer jacket of heat shrinkable polyethylene based tubing was then recovered on to the outside of the assembly to secure the two conductors while the epoxy cured, and to provide external insulation. (In this construction the purpose of the epoxy adhesive was to lower the contact resistance between the electrodes and the conductive material.)

The volume resistivity of the tubing material at 25°C was then found to be approximately 5 ohm centimetres.

The article had the following dimensions.

| Inner tube of nylon | I.D. 0.13" | O.D. 0.1875" |
| Conductive tube | I.D. 0.187" | O.D. 0.265" |
| Outer jacket | I.D. 0.265" | O.D. 0.295" |

A potential of 12 volts was applied across the conductors and the current measured at intervals of 10 seconds while the temperature of the tubing increased. After several minutes the temperature was approximately 23 degrees centigrade above ambient and the current had dropped to about half of the initial value.

It was clear that the increase of temperature of the tubing resulted in an increase in volumetric resistivity of the tubing material and a subsequent decrease in current.

Example 2

Electrically powered conduit heaters, having the structure shown in Figure 1 and designed for operation at 12 V, were made by the following method.

28 AWG silver plated copper wire, consisting of 7 strands of 36 AWG, were coated by melt extrusion with a thin layer of conductive polymeric material, using a wire preheat as described earlier, to form the electrodes 4. The purpose of this coating was to obtain good bonding and electrical contact between the wire electrodes 4 and the bulk jacket of the conductive polymeric material 3 of the heater over the whole length of the electrodes 4.

A core tube of nylon 5 having an outside diameter of 3/16" was used to carry the fluid and around this were helically wound two of the coated wires 4 separated by a distance of 3/8" and with a helical pitch of 3/4".

This tubing was then preheated using a tube furnace to a temperature just below the melting temperature of the core tube 5 in order to soften the conductive polymeric material on the wires 4, and then immediately passed through a cross heat extruder die. This coated the tube with a range of thicknesses of conductive polymer compound 3 exhibiting PTC behaviour and with a room temperature volume resistivity in the range 9 to 13 ohm cm. The thicknesses of these conductive layers were in the range of .005" to .030".

Heater samples were prepared by cutting test lengths of this tubing, trimming back the conductive compound to expose the ends of the core tube, and exposing the bus wires for electrical connection. Electrical insulating was supplied in the form of heat shrink tubing recovered over the length of conductive polymeric material. Alternatively, insulation could have been applied by melt processing during the earlier extrusion process.

A 1ft length of such a heater was powered at 12V at room temperature with no fluid flow, and found to have a steady state surface temperature of approximately 45°C, i.e. a delta T of 25°C, at a steady state power of approximately 12 W. When the ambient temperature was reduced to -30°C, the power delivered rose to 24 W, with a delta T of 50°C. When powered in a 40°C ambient, the maximum temperature reached was 55°C, i.e. a delta T of only 15°C, with a steady state power of only 8 W. This demonstrates the self regulating nature of the heater, the power output changing with the ambient temperature.

EXAMPLE 3

An electrically powered conduit heater, in conjunction with a jet assembly, (as shown in Figure 6), was made by the following method.

Where the conduit heater or hose was desired for windscreen wash water heating, a length of conduit produced as described in Example 4 above was coupled with a jet assembly. The nylon core tube 5 was a push fit into an inner diameter of the jet assembly 24 and the conduit and any exposed bus wires were potted into the assembly with a curable resin or adhesive, to secure the hose within the assembly and to insulate the wire ends from contact with the water.

## EXAMPLE 4

An electrically powered conduit heater, having the structure shown in Figure 1 and designed for operation at mains voltage, was made by a similar method to that described in Example 2 above. There were, however, a number of slight differences:

The wire used for the electrodes was 22 AWG silver plated copper, consisting of 19 strands of 34 AWG. This was coated with conductive polymeric material as described in Example 2.

The nylon core tubing used was 3/8" O.D. and the wires were wrapped with a 3/8" spacing on a helical pitch of 3/4".

This wrapped core tube was fed through a preheat oven and into an extruder cross head die as before, where it was coated with approximately 1mm of conductive polymeric material, of a type normally used for making PTC strip heaters, exhibiting PTC behaviour and having a room temperature volume resistivity of around 2000 ohm cm.

A 1ft long sample of this tubing was prepared and tested in the same manner as described in Example 2, but powered at 110V a.c., with the following results.

| Ambient Temperature | Power Output (Steady State) | Delta T (Heater surface temp. - ambient) |
|---|---|---|
| -30$^\circ$ C | 34 W | 60$^\circ$ C |
| 20$^\circ$ C | 21 W | 36$^\circ$ C |
| 40$^\circ$ C | 15 W | 24$^\circ$ C |

These values again illustrate the self regulating nature of the heater. Similar behaviour was obtained in testing at 240V a.c.

## Claims

1. A heatable conduit suitable for heating a fluid passing through the conduit, comprising

(a) an electrically conductive polymeric material which exhibits PTC behaviour and comprises an organic polymer, and dispersed in the polymer a particulate conductive filler, and

(b) at least one pair of electrodes of opposite polarity which are helically arranged and in contact with the conductive material, which when connected to a source of electrical power cause a substantial portion of the electrical current to flow between the electrodes substantially parallel to the faces of the conduit, thereby heating the electrically conductive polymeric material and hence the fluid.

2. A conduit according to claim 1, wherein there is an electrically insulating hollow tubular liner inside the conductive polymeric material.

3. A heatable conduit suitable for heating a fluid passing through the conduit, comprising

(a) an electrically conductive polymeric material, which exhibits PTC behaviour and comprises an organic polymer, and dispersed in the polymer a particulate conductive filler,

(b) an electrically insulating hollow tubular liner, and

(c) at least one pair of electrodes of opposite polarity which are in electrical contact with the conductive polymeric material and which when connected to a source of electrical power cause a substantial portion of the electrical current to flow between the electrodes substantially parallel to the faces of the conduit, thereby heating the electrically conductive polymeric material and hence the fluid.

4. A conduit according to any preceding claim, wherein the electrically conductive polymeric material is in the form of a tube, or in the form of fibres or tapes.

5. A conduit according to any preceding claim comprising an electrically insulating jacket outside the tube of conductive polymeric material.

6. A conduit according to any preceding claim comprising a pre-installed electrically insulating hollow tubular liner and an electrically insulating outer jacket.

7. A conduit according to any preceding claim, wherein when there is an electrical insulating liner or jacket the electrodes are sandwiched between the conductive polymeric layer and either the electrically insulating liner or the electrically insulating jacket, or the electrodes are embedded in the conductive polymeric material.

8. A conduit according to any preceding claim, wherein the conductive polymeric material is cross-linked.

9. A method of heating a fluid comprising

(a) providing a conduit according to any preceding claim, and

(b) connecting the electrodes to a source of electrical power to cause a substantial portion of the electrical current to flow between the electrodes substantially parallel to the faces of the conduit, thereby heating the conduit and hence the fluid.

10. A method of making a conduit accordng to any of claims 1 - 8 comprising:

(a) providing an electrically insulating hollow tubular liner,

(b) positioning at least two electrodes along the hollow tubular liner in contact therewith, preferably in a helical configuration,

(c) positioning, preferably extruding an electrically conductive polymeric material around the electrodes and liner and simultaneously or subsequently,

(d) optionally positioning, preferably extruding an outer jacket, which is preferably electrically insulating and preferably thermally insulating around the conductive polymeric material.

11. A method of minimising the contact resistance between an electrode and a bulk conductive polymeric material to be positioned around the electrode, comprising:

(i) positioning preferably extruding an additional conductive polymeric material around the electrodes and preheating the electrodes and the additional polymeric layer to a temperature above the melting temperature of the additional polymeric layer,

(ii) positioning, preferably extruding the bulk conductive polymeric material around the additional layer,

12. A method according to claim 10, wherein, before step (b) an additional conductive polymeric layer is positioned, preferably extruded around the electrodes, in a method according to claim 11.

Fig.1.

Fig.2.

Fig.3.

Fig.4.

Fig.5.

Fig.6.